# EUROPEAN PATENT SPECIFICATION

(11) **EP 3 266 607 B1**
(45) Date of publication and mention of the grant of the patent: **07.10.2020**
(21) Application number: 16758934.0
(22) Date of filing: 02.03.2016
(51) Int. Cl.: B32B 9/00, C23C 4/06, C23C 4/10, C23C 28/00, C08J 7/04

(54) **FIBER-REINFORCED RESIN STRUCTURE AND METHOD FOR PRODUCING FIBER-REINFORCED RESIN STRUCTURE**
FASERVERSTÄRKTE HARZSTRUKTUR UND VERFAHREN ZUR HERSTELLUNG EINER FASERVERSTÄRKTEN HARZSTRUKTUR
STRUCTURE DE RÉSINE RENFORCÉE PAR DES FIBRES ET PROCÉDÉ DE PRODUCTION D'UNE STRUCTURE DE RÉSINE RENFORCÉE PAR DES FIBRES

(30) Priority: 04.03.2015 JP 2015042075
(43) Date of publication of application: 10.01.2018
(73) Proprietor: Tocalo Co., Ltd., Kobe-shi, Hyogo 650-0047 (JP)
(72) Inventor: HABU, Yoichiro, Kurokawa-Gun Miyagi 981-3514 (JP); MIYAKE, Yasuo, Akashi-shi Hyogo 674-0093 (JP); ABE, Naoki, Kurokawa-Gun Miyagi 981-3514 (JP); HAMAGUCHI, Tatsuya, Chiba 2730044 (JP)
(74) Representative: Grünecker Patent- und Rechtsanwälte PartG mbB
(86) International application number: PCT/JP2016/056357
(87) International publication number: WO 2016/140241

(56) References cited:
- WO-A2-01/46324
- JP-A- H0 570 866
- JP-A- S6 113 798
- JP-A- H05 139 870
- JP-A- H07 304 037
- JP-A- H08 296 675
- JP-A- S60 214 957
- JP-A- 2000 178 709
- JP-A- 2000 351 683
- JP-A- 2001 287 312
- JP-A- 2003 301 252
- JP-A- 2004 190 136
- JP-A- 2004 190 136
- JP-A- 2005 082 864
- JP-A- 2006 137 143
- JP-A- 2014 111 364
- US-A1- 2014 141 257
- US-B1- 6 982 116

## Description

### TECHNICAL FIELD

This invention relates to a fiber-reinforced resin structure formed by applying surface properties to a fiber-reinforced plastic substrate such as carbon fiber-reinforced plastic, glass fiber-reinforced plastic or the like and a method for producing the same.

### RELATED ART

Materials such as carbon fiber-reinforced plastic, glass fiber-reinforced plastic and so on are small in the specific gravity as compared to a metal material or the like and have features that a longitudinal elasticity modulus is high and particularly a specific strength is excellent. Such fiber-reinforced plastic materials are widely used in a field of engineering material such as material for machine parts of airplanes, automobiles and so on, or material for sport goods such as fishing rods and so on.

The fiber-reinforced plastic substrates have excellent characteristics as a strength member for structures, but actually there are many issues to be overcome in the surface properties. For instance, the surface of the substrate is substantially composed mainly of a resin (epoxy resin or the like) though the fibers are dispersed therein, so that abrasion resistance property is insufficient. Furthermore, the heat resistance of the substrate surface is dependent on the heat resistance of the resin itself, so that service temperature thereof is critical.

In order to overcome the aforementioned problems of the reinforced plastic substrates, there have hitherto been proposed a method of applying an oxide ceramic such as alumina, alumina/titania or the like to the surface by a thermal spraying process and a method of applying a metallic Ni or Ni-P plated coating to the surface through a plating method. However, the former method is lacking in the adhesion force to the substrate, while the latter method is remarkably lacking in the abrasion resistance due to the rigidity, which are issues to be overcome.

As to the lacking of the adhesion force, there is a proposal of arranging an intermediate layer to enhance an adhesion force between a substrate and a thermal sprayed coating (Patent Document 1), but it is not considered to join the inserted fibers to the thermal sprayed coating. As a proposal for improving the abrasion resistance in the latter method are described, for example, a method of forming an non-electrolytic plating layer on a surface of a roll pipe made from the fiber-reinforced plastic substrate (Patent Document 2) and a method of applying a composite plating later containing fluorine resin particles onto the surface of the roll pipe made from the fiber-reinforced plastic substrate (Patent Document 3), but these methods are actually unsatisfactory.

As a plastic-based composite material reinforced with carbon fibers or glass fibers being excellent in the surface properties such as abrasion resistance, heat resistance and the like, there are newly proposed (i) a plastic-based composite material being excellent in the surface properties such as abrasion resistance and so on obtained by forming a thermal sprayed coating layer made from an oxide ceramic or a cermet thereof as a top coating onto the surface of the fiber-reinforced plastic substrate through an intermediate layer made from a mixture of a resin of the same kind as the resin constituting the substrate and ceramic particles (Patent Document 4) and (ii) a plastic-based composite material being excellent in the surface properties such as abrasion resistance and so on obtained by forming a thermal sprayed coating layer made from a carbide cermet as a top coating onto the surface of the fiber-reinforced plastic substrate through an intermediate layer made from a mixture of a resin of the same kind as the resin constituting the substrate and ceramic particles (Patent Document 5). Other fiber-reinforced plastic substrates are disclosed in Patent Documents 7 to 9. Patent Document 10 discloses an inner component of a plasma processing container comprising two ceramic layers formed by thermal spraying.

### PRIOR ART DOCUMENTS

### PATENT DOCUMENTS

Patent Document 1: JP-A-H02-26875
Patent Document 2: JP-A-H05-286058
Patent Document 3: JP-A-H04-292634
Patent Document 4: JP-A-2001-240953
Patent Document 5: JP-A-2001-270015
Patent Document 6: JP-A-2000-178709
Patent Document 7: WO 01/46324 A2
Patent Document 8: US 2014/141257 A1
Patent Document 9: US 6 982 116 B1
Patent Document 10: JP-A-2004-190136

### SUMMARY OF THE INVENTION

### TASK TO BE SOLVED BY THE INVENTION

When the oxide ceramic such as Al₂O₃ or the like or the carbide cermet such as WC or the like is sprayed onto the intermediate layer formed on the surface of the fiber-reinforced plastic substrate, the adhesion force is improved, but there is caused a new issue that the surface properties are not sufficient or the weight is increased though the surface properties are improved. As a result, it is actual that the properties inherent to the fiber-reinforced plastic substrate having a light weight and a rigidity cannot be developed.

The invention is made for solving the aforementioned problems of the conventional techniques and an object thereof is to provide a fiber-reinforced resin structure having improved surface properties and reinforced with carbon fibers or glass fibers while keeping lightweight properties.

### SOLUTION FOR TASK

The inventors have made studies for achieving the above object and found that a fiber-reinforced resin structure having the following construction is an effective solution means, and hence the invention has been accomplished. That is, the invention is a fiber-reinforced resin structure comprising a fiber-reinforced plastic substrate and a thermal sprayed coating formed thereon and composed mainly of boron carbide as a top coating, wherein the fiber-reinforced resin structure is provided with an intermediate layer A made from a mixture of a resin and oxide ceramic particles between the substrate and the top coating; and wherein the fiber-reinforced resin structure is provided with an intermediate layer B made from oxide ceramics between the intermediate layer A and the top coating.

Also, the inventors propose the followings as an improved embodiment of the fiber-reinforced resin structure.
(1) The fiber-reinforced plastic substrate is a carbon fiber-reinforced plastic substrate.
(2) The resin contained in the intermediate layer A includes a resin of the same kind as the resin contained in the substrate.
(3) At least a part of the melted and solidified resins is integrally formed at a boundary face between the fiber-reinforced plastic substrate and the intermediate layer A.
(4) The ceramic particles contained in the intermediate layer A are oxide ceramic particles containing one or more selected from aluminum oxide, zirconium oxide, yttrium oxide, silicon oxide, magnesium oxide, chromium oxide and titanium oxide.
(5) The intermediate layer B is a layer made from one or more oxide ceramics selected from aluminum oxide, zirconium oxide, yttrium oxide, silicon oxide, magnesium oxide, chromium oxide and titanium oxide.
(6) The top coating is formed by a controlled atmosphere thermal spraying process.

Moreover, Patent Document 6 is known as a technique of thermal spraying boron carbide though it is not an example of using the fiber-reinforced plastic material as the substrate.

### EFFECT OF THE INVENTION

As mentioned above, according to the invention, the thermal sprayed coating composed mainly of boron carbide is formed on the fiber-reinforced plastic substrate as a top coating, so that the surface properties can be improved while keeping the lightweight properties.

### BRIEF DESCRIPTION OF THE DRAWINGS

FIG. 1 is a schematically section view of a fiber-reinforced resin structure according to the invention.
FIG. 2 is a graph showing results of a test for a resistance to slurry erosion in Examples.

### EMBODIMENTS FOR CARRYING OUT THE INVENTION

Embodiments according to the invention will be described in detail below, but the invention is not limited thereto.

The fiber-reinforced resin structure according to the invention is constructed by using fiber-reinforced plastics such as carbon fiber-reinforced plastics (CFRP) and glass fiber-reinforced plastics (GFRP) as a substrate and forming a coating having excellent surface properties thereon. From a viewpoint of the strength, the fiber-reinforced plastics are preferable to be carbon fiber-reinforced plastics (CFRP).

As the fiber-reinforced plastic substrate can be used a resin for a reinforced plastic and a reinforcing material in a proper combination in accordance with use purpose and performances required. For example, glass fibers and carbon fibers are important as the reinforcing material, but inorganic material such as whisker, asbestos, and mica, various other fibers such as aramid fibers, cotton, linen, rayon, vinylon, Tetron (registered trade mark), acryl and so on may be used. As a synthetic resin being a matrix is preferably used a thermosetting resin such as polyester resin, epoxy resin, phenolic resin (bakelite), furan resin or the like. Also, a thermoplastic resin such as polypropylene, polyamide, polyimide, polycarbonate, polyethylene terephthalate (PET) or the like is used preferably. They are shaped into a given form by a prepreg process, a winding process or the like to provide a substrate.

It is preferable that the fiber-reinforced plastic substrate and an intermediate layer mentioned later are roughened by lightly grinding with a grinding material such as alumina particles or the like prior to the subsequent formation of a coating layer. If the carbon fiber-rein forced plastic or glass fiber-reinforced plastic substrate is subjected to a strong roughening, however, the surface form of the substrate itself is frequently damaged, so that it is important to perform a light blasting treatment.

An intermediate layer is formed on the fiber-reinforced plastic substrate. The function of the intermediate layer lies in not only a connection or an adhesive for ensuring a good adhesiveness to a desired coating layer (for example, a top coating) formed on the substrate but also reduction of heat transferred to the substrate in the formation of the coating layer. Since a heat-resistant temperature of the carbon fiber-reinforced plastics (CFRP) as a general-purpose good is about 120°C, it is preferable to form an intermediate layer for shielding heat from exterior in order that the temperature of the substrate does not exceed the above value. This is a point largely different from a case of using a carbon material capable of withstanding to a higher temperature of not lower than 2000°C such as C/C composite (carbon-fiber reinforced carbon composite).

The intermediate layer is composed of plural layers. In forming the plural layers, functions of the layers can be divided by providing each of the layers with different properties. The number of the intermediate layers is not limited.

In the intermediate layer, a layer having a good affinity with the substrate is selected as a layer located nearer to the substrate (e.g. a layer coating the surface of the substrate) for ensuring the adhesiveness to the substrate. To this end, the intermediate layer is made from a mixture of a resin and oxide ceramic particles, and the resin is preferable to be the same kind as the resin contained in the substrate. Also, the ceramic particles are preferable to be oxide ceramic particles containing one or more selected from aluminum oxide (Al₂O₃), zirconium oxide (ZrO₂), yttrium oxide (Y₂O₃), silicon oxide (SiO₂), magnesium oxide (MgO), chromium oxide (Cr₂O₃) and titanium oxide (TiO₂). Such oxide ceramic particles are mixed and dispersed into the resin, whereby the conduction of heat to the substrate can be prevented in the formation of the top coating through thermal spraying. These materials are relatively light in the weight and do not damage the merits of the fiber-reinforced plastic substrate.

The thickness of the intermediate layer is preferable to be 50-500 µm. Also, the average particle size of the ceramic particles is preferable to be 10-100 µm. For example, a mixing ratio (volume ratio) of the resin ingredient and ceramic particles in the intermediate layer is resin: ceramic particles = 1:9-7:3, preferably 2:8-4:6. By using such a mixing ratio is easily made the dispersion state of the particles uniform. Moreover, the blending construction of both the materials may be a gradient blending wherein the resin ingredient is made larger at the side of the substrate and the ceramic particles are made larger at the side of the top coating, or may be a stepwise changing blending.

In the intermediate layer constructed with plural layers, a layer located nearer to the top coating (for example, a layer located just below the top coating) is a layer made from oxide ceramic. Thus, heat is hardly transferred to the substrate and a layer located just above thereof in the formation of the top coating through thermal spraying. Said layer is preferably a layer made of one or more oxide ceramic(s) selected from aluminum oxide (Al₂O₃), zirconium oxide (ZrO₂), yttrium oxide (Y₂O₃), silicon oxide (SiO₂), magnesium oxide (MgO), chromium oxide (Cr₂O₃) and titanium oxide (TiO₂). They are material of light weight having a heat shielding property and do not damage the merits of the fiber-reinforced plastic substrate.

At the boundary face between fiber-reinforced plastic substrate and the intermediate layer, it is preferable that the resins are melted and solidified and at least a part thereof is united integrally. Such an integrally united site can be formed by forming the intermediate layer and then firing the intermediate layer in the atmosphere at a temperature of 50-120°C for about I-10 hours. Thus, the resin in the substrate and the resin in the intermediate layer are fused and rigidly adhered to each other.

The intermediate layer can be formed by PVD process, CVD process, thermal spraying process, a spray process using compressed air and so on. In the case of forming a compact thin film, a PVD process, CVD process or spray process using compressed air is preferable, while in the case of ensuring a thickness, a thermal spraying process or spray process using compressed air is preferable.

In the invention, a thermal sprayed coating composed mainly of boron carbide (B₄C) is formed as a top coating. Thus, desirable surface properties can be applied without damaging lightweight properties as a merit of the fiber-reinforced plastic substrate. In the specification of this application, the term "main ingredient" means an ingredient contained in the largest amount by a molar basis. The purity of boron carbide (B₄C) is preferably not less than 90 mol%, more preferably not less than 95 mol%, further preferably not less than 99 mol%. The thermal sprayed coating is preferable to have a porosity of 0.1-10%. The thermal sprayed coating attains the securement of the thickness and can be formed on a complicated form different from a PVD or CVD coating. Particularly, the top coating to be formed is required to have a thickness equal to or larger than a given value so as to be used for a long time, which can be attained by the thermal sprayed coating of boron carbide (B₄C). Even if the thickness is made thicker, there is no fear of increasing the weight. Furthermore, when the aforementioned intermediate layer is applied to the substrate, the transfer of heat to the substrate can be prevented during thermal spraying. From the above, the combination of the fiber-reinforced plastic substrate and the boron carbide (B₄C) thermal sprayed coating is particularly excellent.

When boron carbide (B₄C) is used as a spraying material, it is preferable to be in a particle shape, for example, in an average particle size of 10-120 µm. The thickness of the thermal sprayed coating composed mainly of boron carbide (B₄C) is, for example, 50-700 µm, preferably 100-500 µm.

After the formation of the thermal sprayed coating, an impregnation treatment with a sealer may be conducted for the purpose of plugging pores in the coating. As the sealer can be used an inorganic one or an organic polymer.

Specifically, the thermal sprayed coating composed mainly of boron carbide (B₄C) has surface properties such as resistance to slurry erosion, resistance to blast erosion, abrasion resistance, oxidation resistance, strength, hardness and so on equal to or higher than those of the other ceramic or cermet thermal sprayed coatings. No material has been found which has a lighter weight than that of boron carbide (B₄C) among spraying materials which can be sprayed onto the fiber-reinforced plastic substrate and can apply surface properties equal to those of boron carbide (B₄C). In the following Table 1 are shown specific gravities of boron carbide (B₄C) and the other main spraying materials.

**Table 1**

| Spraying material | Specific gravity |
|---|---|
| WC cermet | 13.5 |
| Al₂O₃ | 3.9 |
| Cr₂O₃ | 5.2 |
| Cr₃C₂ | 6.7 |
| ZrO₂ | 6.0 |
| Ni-based alloy | 9.0 |
| Hard Cr plating material | 6.9-7.1 |
| B₄C | 2.5 |

As a thermal spraying process for the formation of the top coating are mentioned atmospheric plasma spraying, low pressure plasma spraying, controlled atmosphere thermal spraying, gas combustion flame spraying and so on. Among them, the controlled atmosphere thermal spraying is particularly preferable. The controlled atmosphere thermal spraying is a process of performing the thermal spraying in an atmosphere having a larger ratio of a certain ingredient. By controlling a ratio of a gas other than oxygen such as nitrogen gas or argon gas to not less than 95%, preferably not less than 99% can be prevented oxidation of the spraying material during thermal spraying to improve the properties of the coating.

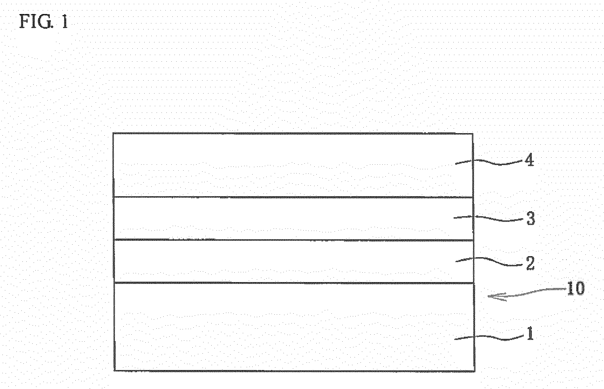

The thus formed fiber-reinforced resin structure has, for example, a cross-section as shown in FIG. 1. In the example of FIG. 1, the fiber-reinforced resin structure 10 comprises a fiber-reinforced plastic substrate 1 and a top coating 4 formed on the substrate I and made of a thermal sprayed coating composed mainly of boron carbide. Moreover, the example of FIG. 1 is a preferable example of the invention, wherein the fiber-reinforced resin structure 10 is formed by providing an intermediate layer 2 on the substrate I (intermediate layer A) and an intermediate layer 3 thereon (intermediate layer B) between the substrate 1 and the top coating 4.

As a use application of the fiber-reinforced resin structure according to the invention are mentioned a fan blade of an engine for an airplane, a turbine blade of a compressor for airplane engine, members in a primary wing and a fuselage of an airplane and a mold used for the manufacture thereof, a turbine blade for a steam turbine, a roll for the manufacture of a paper film, a pressure vessel, a transfer member for semiconductor wafers and FPD substrates, automobile parts, solar buttery members or flames for space equipment, members for wind power generation, inner tube for a chimney, parts for Shinkansen bullet trains and rail vehicles, and so on.

### EXAMPLES

### <Example 1>

This example reports test results on a resistance to slurry erosion in a structure formed by applying a B₄C thermal sprayed coating to a carbon fiber-reinforced plastic (CFRP) substrate (Example 1).

There is first provided a CFRP substrate (substrate 1) of 50 mm x 50 mm having a thickness of 5 mm using an epoxy-based resin as a binder. Subsequently, it is ground with a surface grinder for correcting the flatness thereof.

A mixture of 40 vol% of an epoxy-based resin and 60 vol% of zirconium oxide (ZrO₂) particles (average particle size: 35 µm) is applied onto a surface to be coated with a compressed air driving gun as a coating having a thickness of 150 µm to form an underlying intermediate layer (intermediate layer 2).

After the formation of the underlying intermediate layer (intermediate layer 2), a sample (CFRP substrate 1/intermediate layer 2) is inserted into an electric furnace to perform firing in air at 100°C for 4 hours.

Next, a mixture of 78 wt% of aluminum oxide (Al₂O₃) and 22 wt% of silicon oxide (SiO₂) is sprayed onto a surface to be coated with an atmospheric plasma spraying device as a coating having a thickness of 100 µm to form an upper intermediate layer (intermediate layer 3).

Thereafter, B₄C spraying material (average particle size: 26 µm) is sprayed under a controlled nitrogen atmosphere of 99.995% with a controlled atmosphere thermal spraying machine to form a coating having a thickness of 120 µm as an outermost layer (top coating 4).

After the coating treatment, the same epoxy-based resin as in the underlying intermediate layer (intermediate layer 2) is impregnated into the B₄C thermal sprayed coating as an outermost layer (top coating 4), which is placed in an electric furnace to perform firing in air at 65°C for 12 hours.

With respect to the thus manufactured sample (CFRP substrate 1/ intermediate layer 2/ intermediate layer 3/ top coating 4) is conducted a test for a resistance to slurry erosion with an erosion testing machine (WT-103)(made by Mako Co., Ltd.) several times. A grinding material is WA#600 (average particle size: about 25 µm) and has a concentration of 5 wt%, and a projection distance is 10 mm (at a projection angle of 90°), and a projection angle is 60°, and an air pressure is 0.3 MPa, and a testing time is 1, 2, 3 and 5 minutes.

Also, the same test is conducted to CFRP substrate not subjected to a surface treatment (Comparative Example 1)

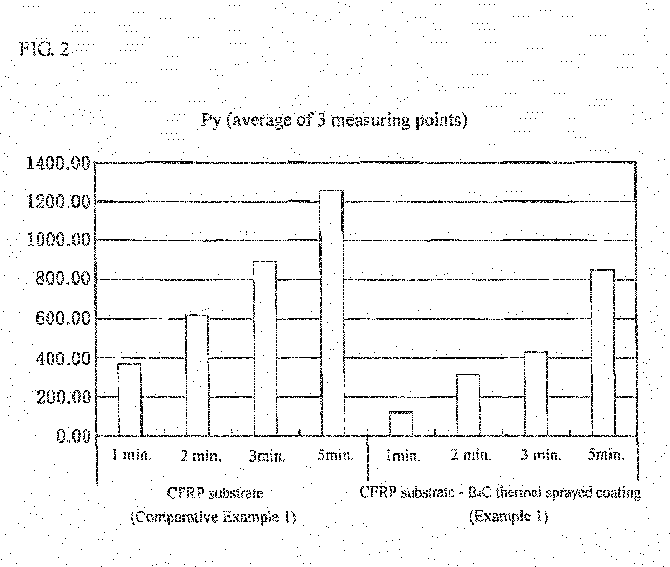

The test results are shown in FIG. 2. It can been seen that the sample of Example 1 obtained by forming B4C thermal sprayed coating on the CFRP substrate is small in the Py value (scattering index of coating thickness) and excellent in the resistance to slurry erosion as compared to a sample of CFRP substrate not subjected to the surface treatment as Comparative Example 1.

From the above is recognized an effect of improving surface properties to the carbon fiber-reinforced plastic substrate.

### <Example 2>

This example reports results evaluated on the resistance to blast erosion, adhesiveness and hardness of a structure obtained by forming B₄C thermal sprayed coating on a carbon fiber-reinforced plastic (CFRP) substrate.

### (Preparation of samples)

### Sample 1

There is first provided CFRP substrate of 50 mm x 50 mm having a thickness of 3 mm using an epoxy-based resin as a binder, which is ground with a surface grinder for correcting the flatness thereof.

Subsequently, a mixture of 40 vol% of an epoxy-based resin and 60 vol% of zirconium oxide (ZrO₂) particles (average particle size: 35 µm) is applied to a surface to be coated as a coating having a thickness of 100 µm with a compressed air driving gun to form an underlying intermediate layer.

After the formation of the underlying intermediate layer, a sample is inserted into an electric furnace and fired in air at 100°C for 4 hours.

Next, a mixture of 78 wt% of aluminum oxide (Al₂O₃) and 22 wt% of silicon oxide (SiO₂) is sprayed onto a surface to be coated as a coating having a thickness of 100 µm with an atmospheric plasma spraying device to form an upper intermediate layer.

Thereafter, B₄C spraying material (average particle size: 26 µm) with a purity of 99% is applied by plasma spraying as a coating having a thickness of 100 µm in a controlled argon atmosphere of 99.9%.

After the coating treatment, the same epoxy-based resin as in the underlying intermediate layer is impregnated into the B₄C thermal sprayed coating as an outermost layer and inserted into an electric furnace to conduct firing in air at 65°C for 12 hours to thereby form a sample 1.

### Sample 2

The substrate and intermediate layers are prepared in the same manner as in Sample 1, and then B₄C spraying material (average particle size: 26 µm) with a purity of 99% is plasma-sprayed in air to form a coating having a thickness of 100 µm as an outermost layer. After the coating treatment, the impregnation treatment and firing treatment are conducted in the same manner as in Sample 1 to form a sample 2.

### Sample 3

The substrate and intermediate layers are prepared in the same manner as in Sample 1, and then B₄C spraying material (average particle size: 26 µm) with a purity of 95% is plasma-sprayed in a controlled argon atmosphere of 99.9% to form a coating having a thickness of 100 µm as an outermost layer. After the coating treatment, the impregnation treatment and firing treatment are conducted in the same manner as in Sample I to form a sample 3.

### Sample 4

There is provided the same substrate as in Sample 1. Subsequently, a metallic A1 is sprayed on a surface to be coated as a coating having a thickness of 100 µm with an atmospheric plasma spraying device to form an intermediate layer.

Thereafter, B₄C spraying material (average particle size: 26 µm) with a purity of 99% is plasma-sprayed in a controlled argon atmosphere of 99.9% to form a coating having a thickness of 100 µm as an outermost layer. After the coating treatment, the impregnation treatment and firing treatment are conducted in the same manner as in Sample 1 to form a sample 4.

### Sample 5

As a sample of CFRP substrate not subjected to a surface treatment is provided CFRP substrate of 50 mm x 50 mm having a thickness of 3 mm using an epoxy-based resin as a binder, which is ground with a surface grinder for correcting the flatness thereof to form a sample 5.

The constructions of the aforementioned samples 1-5 are shown in following Table 2.

**Table 2**

| Sample | Substrate | Intermediate layer (underlying layer/upper layer) | Outermost layer | Process |
|---|---|---|---|---|
| 1 | CFRP | Epoxy resin-ZrO₂/Al₂O₃-SiO₂ | B₄C (purity; 99%) | Controlled atmosphere thermal spraying |
| 2 | CFRP | Epoxy resin-ZrO₂/Al₂O₃-SiO₂ | B₄C (purity: 99%) | Atmospheric plasma spraying |
| 3 | CFRP | Epoxy resin-ZrO₂/Al₂O₃-SiO₂ | B₄C (purity: 95%) | Controlled atmosphere thermal spraying |
| 4 | CFRP | Al | B₄C (purity: 99%) | Controlled atmosphere thermal spraying |
| 5 | CFRP | - | - | - |

### (Blast erosion test)

With respect to each of the samples 1-5 is conducted a blast erosion test using an erosion testing machine. The grinding material is silica sand No. 8 (particle size: 50-100 µm), and a nozzle diameter φ is 1.5 mm, and a projection distance is 15 mm, and a projection angle is 60°, and a feed amount of the grinding material is 12 g/min, and an air flow rate is 6.0 L/min, and a test time is 4 minutes.

The test results are shown in Table 3. It can be seen that all of the samples 1-4 are considerably excellent in the resistance to blast erosion as compared to the sample 5 not subjected to the surface treatment.

### (Adhesiveness test)

The adhesion force of the thermal sprayed coating in each of the samples 1-4 is measured by a test method for tensile adhesion strength defined in JIS H8402. As an adhesive is used a two-pack cold curing-type adhesive (Dev-Tube S-6 made by Illinois Tool Works Corporation).

The test results are shown in Table 3. It can be seen that all of the samples 1-4 have a satisfactory adhesion force (not less than 10 MPa).

### (Hardness test)

With respect to each of the samples 1-4 is made a test for micro-Vickers hardness. A measuring load is 100 gf, and an average value is taken for 10 measuring points.

The test results are shown in Table 3. It can be seen that all of the samples 1-4 have a satisfactory hardness.

**Table 3**

| Sample | Abrasion volume by blast erosion (µm) | Adhesion force (MPa) | Vickers hardness |
|---|---|---|---|
| 1 | 24.5 | 13.6 | 1105 |
| 2 | 57.4 | 13.4 | 970 |
| 3 | 47.3 | 15.5 | 758 |
| 4 | 18.5 | 11.1 | 1137 |
| 5 | 132.8 | - | - |

### <Example 3>

This example reports results evaluated on a resistance to blast erosion every a substrate in structures formed by applying B₄C thermal sprayed coating onto fiber-reinforced plastic substrates. The evaluation is performed on three kinds of CFRP material (epoxy-based resin), CFRP material (bakelite) and glass-epoxy material.

### (Preparation of samples)

### Sample 6

As CFRP material (epoxy-based resin) is provided the same as in Sample 1.

### Sample 7

As CFRP material (bakelite) is provided CFRP substrate of 50 mm x 50 mm having a thickness of 5 mm using bakelite as a binder, which is ground with a surface grinder for correcting the flatness thereof. Subsequently, an intermediate layer and an outermost layer are formed according to the same manner as in Sample 1.

### Sample 8

As a glass-epoxy material is provided a glass fiber-reinforced plastic substrate of 50 mm x 50 mm having a thickness of 5 mm using an epoxy-based resin as a binder, which is ground with a surface grinder for correcting the flatness thereof. Subsequently, an intermediate layer and an outermost layer are formed according to the same manner as in Sample 1.

### (Blast erosion test)

With respect to each of the samples 6-8 is conducted a blast erosion test using an erosion testing machine. The grinding material is WA #220 (average particle size: 67 µm), and a nozzle diameter φ is 1.5 mm, and a projection distance is 15 mm, and a projection angle is 60°, and a feed amount of the grinding material is 20 g/min, and an air flow rate is 6.0 L/min, and a test time is 3 minutes.

The test results are shown in Table 4. All of the samples 6-8 are substantially equal in the resistance to blast erosion.

**Table 4**

| Sample | Abrasion volume by blast erosion (µm) |
|---|---|
| 6 | 163.8 |
| 7 | 197.5 |
| 8 | 200.5 |

### INDUSTRIAL APPLICABILITY

As mentioned above, the fiber-reinforce resin structure according to the invention can be applied to a fan blade of an engine for airplanes, a turbine blade of a compressor for airplane engine, members in a primary wing and a fuselage of an airplane and a mold used for the manufacture thereof, a turbine blade for a steam turbine, a roll for the manufacture of a paper film, a pressure vessel, a transfer member for semiconductor wafers and FPD substrates, automobile parts, solar buttery members and flames for space equipment, members for wind power generation, inner tube for a chimney, parts for Shinkansen bullet trains and rail vehicles, and so on.

### DESCRIPTION OF REFERNECE SYMBOLS

- 1:: substrate
- 2:: intermediate layer (intermediate layer A)
- 3:: intermediate layer (intermediate layer B)
- 4:: top coating
- 10:: fiber-reinforced resin structure

## Claims

1. A fiber-reinforced resin structure comprising a fiber-reinforced plastic substrate and a thermal sprayed coating formed thereon and composed mainly of boron carbide as a top coating,
wherein the fiber-reinforced resin structure is provided with an intermediate layer A made from a mixture of a resin and oxide ceramic particles between the substrate and the top coating; and
wherein the fiber-reinforced resin structure is provided with an intermediate layer B made from oxide ceramics between the intermediate layer A and the top coating .

2. The fiber-reinforced resin structure according to claim 1, wherein the fiber-reinforced plastic substrate is a carbon fiber-reinforced plastic substrate.

3. The fiber-reinforced resin structure according to claim 1 or 2, wherein the resin contained in the intermediate layer A includes a resin of the same kind as the resin contained in the substrate.

4. The fiber-reinforced resin structure according to any one of claims 1-3, wherein at least a part of the melted and solidified resins is integrally formed at a boundary face between the fiber-reinforced plastic substrate and the intermediate layer A.

5. The fiber-reinforced resin structure according to any one of claims 1-4, wherein the oxide ceramic particles contained in the intermediate layer A are oxide ceramic particles containing one or more selected from aluminum oxide, zirconium oxide, yttrium oxide, silicon oxide, magnesium oxide, chromium oxide and titanium oxide.

6. The fiber-reinforced resin structure according to any one of claims 1-5, wherein the intermediate layer B is a layer made from one or more oxide ceramics selected from aluminum oxide, zirconium oxide, yttrium oxide, silicon oxide, magnesium oxide, chromium oxide and titanium oxide.

7. A method for producing a fiber-reinforced resin structure as claimed in any one of claims 1-6, **characterized in that** the top coating is formed by a controlled atmosphere thermal spraying process.

## Patentansprüche

1. Eine faserverstärkte Harzstruktur, umfassend ein faserverstärktes Kunststoffsubstrat und eine darauf gebildete thermisch gespritzte Beschichtung, die hauptsächlich aus Borcarbid als Deckbeschichtung besteht,
wobei die faserverstärkte Harzstruktur mit einer Zwischenschicht A versehen ist, die aus einer Mischung eines Harzes und Oxidkeramikpartikeln zwischen dem Substrat und der Deckbeschichtung hergestellt ist; und
wobei die faserverstärkte Harzstruktur mit einer Zwischenschicht B aus Oxidkeramik zwischen der Zwischenschicht A und der Deckbeschichtung versehen ist.

2. Faserverstärkte Harzstruktur nach Anspruch 1, wobei das faserverstärkte Kunststoffsubstrat ein kohlefaserverstärktes Kunststoffsubstrat ist.

3. Faserverstärkte Harzstruktur nach Anspruch 1 oder 2, wobei das in der Zwischenschicht A enthaltene Harz ein gleichartiges Harz wie das im Substrat enthaltene Harz enthält.

4. Faserverstärkte Harzstruktur nach einem der Ansprüche 1 bis 3, wobei mindestens ein Teil der geschmolzenen und erstarrten Harze an einer Grenzfläche zwischen dem faserverstärkten Kunststoffsubstrat und der Zwischenschicht A einstückig ausgebildet ist.

5. Faserverstärkte Harzstruktur nach einem der Ansprüche 1 bis 4, wobei die Oxidkeramikpartikel, die in der Zwischenschicht A enthalten sind, Oxidkeramikpartikel sind, die eines oder mehrere ausgewählt aus Aluminiumoxid, Zirkonoxid, Yttriumoxid, Siliciumoxid, Magnesiumoxid, Chromoxid und Titanoxid enthalten.

6. Faserverstärkte Harzstruktur nach einem der Ansprüche 1 bis 5, wobei die Zwischenschicht B eine Schicht aus einer oder mehreren Oxidkeramiken ausgewählt aus Aluminiumoxid, Zirkonoxid, Yttriumoxid, Siliciumoxid, Magnesiumoxid, Chromoxid und Titanoxid ist.

7. Verfahren zur Herstellung einer faserverstärkten Harzstruktur nach einem der Ansprüche 1 bis 6, **gekennzeichnet dadurch, dass** die Deckbeschichtung durch ein thermisches Spritzverfahren unter kontrollierter Atmosphäre gebildet wird.

## Revendications

1. Structure en résine à renfort de fibres comprenant un substrat en plastique à renfort de fibres et un revêtement par projection thermique formé sur ledit substrat et composé principalement de carbure de bore sur un revêtement supérieur,
dans laquelle la structure en résine à renfort de fibres est pourvue d'une couche intermédiaire A constituée d'un mélange de résine et de particules de céramique d'oxyde entre le substrat et le revêtement supérieur ; et
dans laquelle la structure en résine à renfort de fibres est pourvue d'une couche intermédiaire B constituée de céramiques d'oxyde entre la couche intermédiaire A et le revêtement supérieur.

2. Structure en résine à renfort de fibres selon la revendication 1, dans laquelle le substrat en plastique à renfort de fibres est un substrat en plastique à renfort de fibres de carbone.

3. Structure en résine à renfort de fibres selon la revendication 1ou 2, dans laquelle la résine contenue dans la couche intermédiaire A comprend une résine de même type que la résine contenue dans le substrat.

4. Structure en résine à renfort de fibres selon l'une quelconque des revendications 1 à 3, dans laquelle au moins une partie des résines fondues et solidifiées est formée intégralement sur une face de délimitation entre le substrat en plastique à renfort de fibres et la couche intermédiaire A.

5. Structure en résine à renfort de fibres selon l'une quelconque des revendications 1 à 4, dans laquelle les particules de céramique d'oxyde contenues dans la couche intermédiaire A sont des particules de céramique d'oxyde contenant un ou plusieurs oxydes sélectionnés parmi l'oxyde d'aluminium, l'oxyde de zirconium, l'oxyde d'yttrium, l'oxyde de silicium, l'oxyde de magnésium, l'oxyde de chrome et l'oxyde de titane.

6. Structure en résine à renfort de fibres selon l'une quelconque des revendications 1 à 5, dans laquelle la couche intermédiaire B est une couche constituée d'une ou plusieurs céramiques d'oxyde sélectionnées parmi l'oxyde d'aluminium, l'oxyde de zirconium, l'oxyde d'yttrium, l'oxyde de silicium, l'oxyde de magnésium, l'oxyde de chrome et l'oxyde de titane.

7. Procédé de production d'une structure en résine à renfort de fibres selon l'une quelconque des revendications 1 à 6, **caractérisé en ce que** le revêtement supérieur est formé par un processus de projection thermique sous atmosphère contrôlée.
